# EUROPÄISCHE PATENTANMELDUNG

(11) **EP 1 985 414 A1**
(43) Veröffentlichungstag der Anmeldung: **29.10.2008**
(21) Anmeldenummer: 08100983.9
(22) Anmeldetag: 28.01.2008
(51) Int. Cl.: B25F 5/02, B23B 39/20

(54) **Werkzeugkopf für ein Elektrowerkzeug**

(30) Priorität: 27.04.2007 DE 102007020425
(71) Anmelder: Ferm Corporate B.V., 8028 PM Zwolle (NL)
(72) Erfinder: Elders, Ruud Gerard, 8111 PR Heeten (NL)
(74) Vertreter: von Kreisler Selting Werner

(57) **Zusammenfassung**

Ein Werkzeugkopf für ein Elektrowerkzeug zum Schrauben oder Bohren weist mindestens zwei Werkzeugaufnahmen (18, 20) auf Durch die Werkzeugaufnahmen (18, 20) kann jeweils ein Bit (24) aufgenommen werden. Ferner ist eine Antriebswelle (14) zum Drehen der Werkzeugaufnahmen vorgesehen. Die beiden Werkzeugaufnahmen (18, 20) sind in Richtung ihrer Längsachse (30) verschiebbar.

## Beschreibung

Die Erfindung betrifft einen Werkzeugkopf für Elektro-Werkzeuge insbesondere zum Schrauben und/oder Bohren.

Derartige Handwerkzeuge, die häufig mit Akkus betrieben werden, weisen ein Gehäuse mit einem Elektromotor auf, Bei herkömmlichen Akkuschraubern oder Akkubohrern ist mit der Abtriebswelle des Elektromotors ein Bohrfutter zur Aufnahme von Bohrern oder Bits verbunden.

Beispielsweise beim Verwenden unterschiedlicher Schrauben ist es erforderlich, dass Bit häufig zu wechseln.

Aus DE 20 2004 019 047 ist ein Werkzeugkopf für ein Elektro-Werkzeug, wie einen Akkuschrauber bekannt, durch den gleichzeitig zwei Bits aufgenommen werden können. Hierzu weist der Werkzeugkopf zwei Werkzeugaufnahmen auf, in denen ein Bit aufgenommen werden kann. Mit den beiden Werkzeugaufnahmen ist jeweils ein Zahnrad verbunden. Die beiden Zahnräder sind einander gegenüberliegend angeordnet und kämmen mit einem zwischen den beiden Zahnrädern angeordneten Zahnrad, das mit der Antriebswelle verbunden ist. Die Antriebswelle ist mit dem Elektromotor verbunden. Da die beiden Bits gleichzeitig angetrieben werden und beide Bits aus dem Gehäuse des Werkzeugkopfes vorstehen, besteht beispielsweise die Gefahr von Beschädigungen des Werkstückes durch das momentan nicht benutzte Bit. Aufgabe der Erfindung ist es, einen verbesserten Werkzeugkopf für ein Elektrowerkzeug zum Schrauben und/oder Bohren zu schaffen, bei dem insbesondere ein Beschädigen des Werkstücks vermieden ist.

Die Lösung der Aufgabe erfolgt erfindungsgemäß durch die Merkmale des Anspruchs 1.

Der erfindungsgemäße Werkzeugkopf weist mindestens zwei Werkzeugaufnahmen auf, die insbesondere zur Aufnahme von Bohrern oder Bits geeignet sind. Vorzugsweise sind genau zwei Werkzeugaufnahmen vorgesehen, die insbesondere zur Aufnahme von Bits geeignet sind. Die beiden Werkzeugaufnahmen sind mit einer Antriebswelle verbindbar. Die Werkzeugaufnahmen werden durch die Antriebswelle angetrieben. Dies erfolgt insbesondere über kämmende Zahnräder. Durch das Drehen der Antriebswelle erfolgt ein Drehen der Werkzeugaufnahme.

Erfindungsgemäß sind die Werkzeugaufnahmen in Richtung ihrer Längsachse verschiebbar. Hierdurch ist ein Verschieben des mit der Werkzeugaufnahme verbundenen Werkzeuges, wie des Bits möglich. Ein Verschieben, bzw. ein Zurückführen einer oder mehrerer Werkzeugaufnahmen in eine zurückgezogene Position, bewirkt somit, dass beispielsweise die Spitzen der Bits in unterschiedlichen Ebenen angeordnet sind. Hierdurch ist die Gefahr des Verletzens eines Werkstücks durch ein derzeit nicht benötigtes Bit verringert. Vorzugsweise erfolgt ein Zurückziehen der Werkzeugaufnahme derart, dass das in die zurückgezogene Position übergeführte Bit vollständig innerhalb einer Schutzabdeckung oder eines Gehäuses des Werkzeugkopfes angeordnet ist. Vorzugsweise weist jede Werkzeugaufnahme ein Kraftübertragungselement, wie ein Zahnrad auf. Die Kraftübertragungselemente sind mit einem auf der Antriebswelle angeordneten Antriebselement, bei dem es sich ebenfalls um ein Zahnrad handeln kann, verbindbar, Die beiden Werkzeugaufnahmen können somit über eine einzige Antriebswelle, die ggf. über ein zwischengeschaltetes Getriebe mit dem Elektromotor verbunden ist, angetrieben werden.

Hierbei kann die Werkzeugaufnahme zur Aufnahme von Bits zum Schrauben dienen. Insbesondere können aber auch andere Bitelemente aufgenommen werden, die beispielsweise mit einem Fräskopf, einem Bohrer oder einem anderen Werkzeug verbunden sind. Die Bitelemente weisen insbesondere einen hexagonalen Schaft auf.

Bei einer besonders bevorzugten Ausführungsform des erfindungsgemäßen Werkzeugkopfs werden die Kraftübertragungselemente durch Verschieben der entsprechenden Werkzeugaufnahme in Richtung ihrer Längsachse mit dem mit der Antriebswelle fest verbundenen Antriebselement in bzw. außer Eingriff gebracht. Durch ein Verschieben der Werkzeugaufnahme, insbesondere in die zurückgezogene Position, wird das entsprechende Kraftübertragungselement, das mit dieser Werkzeugaufnahme verbunden ist und das Antriebselement vorzugsweise außer Eingriff gebracht. Es erfolgt somit eine Art Auskuppeln bzw. ein Lösen der Verbindung zur Kraft- bzw. Drehmomentübertragung zwischen der Antriebswelle und der Werkzeugaufnahme. Dies hat den Vorteil, dass das derzeit nicht benötigte Werkzeug, das sich in der zurückgezogenen Position befindet, nicht angetrieben wird. Hierdurch ist ein Beschädigen des Werkstücks weiter vermieden.

Vorzugsweise erfolgt das Verschieben der Werkzeugaufnahme durch ein Betätigungselement. Insbesondere beim Vorsehen von zwei Werkzeugaufnahmen ist es besonders bevorzugt, ein gemeinsames Betätigungselement vorzusehen. Bei dem Betätigungselement kann es sich um ein ebenfalls in Richtung oder senkrecht zu der Längsachse verschiebbares Betätigungselement handeln. Vorzugsweise ist das Betätigungselement verschwenkbar. Hierbei erfolgt in besonders bevorzugter Ausführungsform beim Verschwenken des Betätigungselements ein Verschieben einer Werkzeugaufnahme in eine ausgeschobene Position. In der ausgeschobenen Position befindet sich das Werkzeug, das als nächstes verwendet werden soll. Vorzugsweise erfolgt gleichzeitig mit dem Verschieben einer Werkzeugaufnahme in die ausgeschobene Position ein Zurückführen der insbesondere einen anderen Werkzeugaufnahme in die zurückgezogene Position. Beim Vorsehen von zwei Werkzeugaufnahmen werden somit erfindungsgemäß durch ein einmaliges Betätigen des Betätigungselements die Positionen beider Werkzeugaufnahmen verändert. Es erfolgt somit ein Wechsel der Positionen der beiden Werkzeugaufnahmen durch eine einfache Betätigung, insbesondere ein einfaches Verschwenken des Betätigungselementes.

Das vorzugsweise ring- oder zumindest teilringförmige ausgebildete Betätigungselement umschließt die Antriebswelle zumindest teilweise. Die Antriebswelle ist somit vorzugsweise durch das Betätigungselement hindurch geführt.

In einer weiteren besonders bevorzugten Ausführungsform weist das Bestätigungselement je Werkzeugaufnahme eine Betätigungsfläche auf. Beim Vorsehen von zwei Werkzeugaufnahmen weist das Betätigungselement somit zwei Betätigungsflächen auf. Die Betätigungsfläche je Werkzeugaufnahme ist in dieser bevorzugten Ausführungsform gegenüber der Längsachse, d. h. der Achse in deren Richtung ein Verschieben der Werkzeugaufnahme erfolgt, geneigt. Hierdurch erfolgt durch ein Drehen des Betätigungselements ein Gleiten einer an der Betätigungsfläche anliegenden Anlagefläche der Werkzeugaufnahme, wobei auf Grund der Neigung der Betätigungsfläche ein Verschieben der Werkzeugaufnahme in Längsrichtung, d. h. in Richtung der Längsachse, erfolgt. Dies ist insbesondere gewährleistet, da die Werkzeugaufnahme ausschließlich in Richtung der Längsachse verschoben werden kann. Ein seitliches Verschieben ist nicht möglich.

Bei einer weiteren bevorzugten Ausführungsform ist zusätzlich mindestens ein Rückfuhrelement vorgesehen. Mit Hilfe des Rückführelements erfolgt ein vorzugsweise automatisches Zurückführen einer Werkzeugaufnahme aus der ausgeschobenen Position in die zurückgezogene Position. Hierdurch ist gewährleistet, dass eine nicht benötigte Werkzeugaufnahme sich stets in der zurückgezogenen Position befindet. Hierzu kann das Rüekführelement beispielsweise ein elastisches Element wie eine Feder, insbesondere ein Zugfeder aufweisen, so dass auf eine sich in der ausgeschobenen Position befindliche Werkzeugaufnahme stets eine die Werkzeugaufnahme zurückziehende Kraft wirkt. Dies hat zur Folge, dass, sobald ein Zurückführen der Werkzeugaufnahme in die zurückgezogene Position auf Grund der Stellung des Betätigungselements möglich ist, dieses Zurückführen automatisch erfolgt.

In bevorzugter Ausführungsform weist das Rückführelement eine Wippe auf, die zwei Werkzeugaufnahmen miteinander verbindet. Die Wippe, die vorzugsweise an einem Drehpunkt ortsfest, insbesondere mit dem Gehäuse verbunden ist, bewirkt somit, dass sich die beiden Werkzeugaufnahmen stets in unterschiedlichen Positionen befinden. Vorzugsweise sind zwei insbesondere einander gegenüberliegende Wippen vorgesehen.

Neben den vorstehend genannten Vorteilen besteht ein weiterer wesentlicher Vorteil des erfindungsgemäßen Werkzeugkopfs darin, dass ein schneller Wechsel zwischen einzelnen Werkzeugen, insbesondere unterschiedlichen Bits möglich ist.

Nachfolgend wird die Erfindung anhand einer bevorzugten Ausführungsform unter Bezugnahme auf die anliegenden Zeichnung näher erläutert.

Es zeigen:

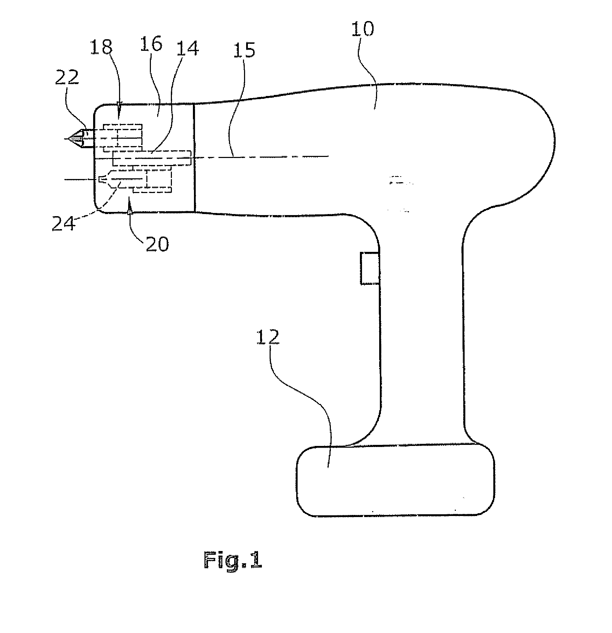

- Fig. 1: eine schematische Seitenansicht eines erfindungsgemäßen Akkuschraubers,
- Fign. 2 bis 4: schematische Darstellungen des Werkzeugkopfes jeweils in einer Draufsicht und einer perspektivischen Ansicht in unterschiedlichen Stellungen der beiden Werkzeugaufnahmen, und
- Fig. 5: eine schematische Schnittansicht von zwei über eine Wippe miteinander verbundenen Werkzeugaufnahmen.

Ein Akkuschrauber weist einen Gehäusekörper 10 auf, in dem ein nicht dargestellter Elektromotor angeordnet ist. Der Elektromotor ist mit einem in einem Akkugehäuse 12 vorgesehenen Akku verbunden. Über den Elektromotor wird, ggf. über ein zwischengeschaltetes Getriebe, eine Antriebswelle 14 angetrieben. Die Antriebswelle 14 ist somit um eine Längsachse 15 drehbar. Die Abtriebswelle ist in einem Werkzeugkopf 16 angeordnet und mit Werkzeugaufnahmen 18, 20 verbindbar. In jeder Werkzeugaufnahme 18, 20 ist ein Bit 22, 24 angeordnet.

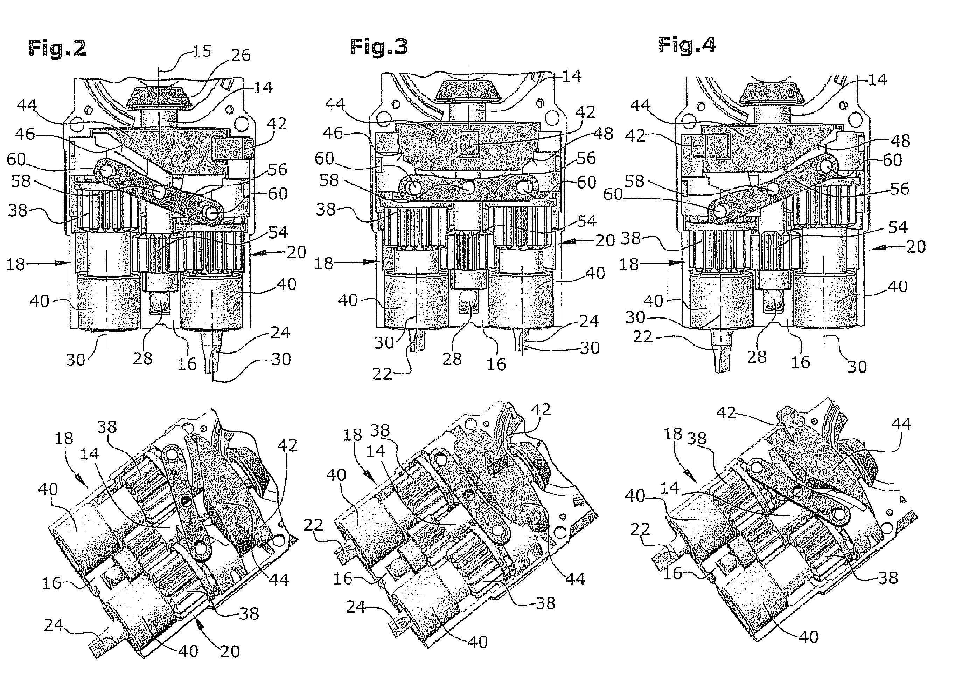

In den Fign. 2 bis 4 ist der Werkzeugkopf 16 jeweils in einer Draufsicht und einer perspektivischen Ansicht dargestellt. In sämtlichen Ansichten ist die obere Gehäusehälfte weggelassen, so dass die innerhalb des Werkzeugkopfs 16 angeordneten Bauteile sichtbar sind.

Die Antriebswelle 14 weist an ihrem in Richtung des Gehäusekörpers 10 des Akkuschraubers weisenden Ende ein Zahnrad 26 auf. Über das Zahnrad 26 und ein nicht dargestelltes zwischengeschaltetes Getriebe ist die Antriebswelle 14 mit dem Elektromotor des Akkuschraubers verbunden, so dass die Antriebswelle 14 um ihre Längsachse 15 drehbar ist. Die Antriebswelle 14 ist in Richtung der Längsachse 15, d. h. in axialer Richtung nicht verschiebbar. Vielmehr ist das gegenüberliegende Ende 28 der Antriebswelle 14 in dem Gehäuse 16, von dem in den Fign. 2 bis 4 nur die untere Gehäusehälfte dargestellt ist, gelagert.

Parallel zu der Längsachse 15 verlaufen die Längsachsen 30 der beiden Werkzeugaufnahmen 18, 20.

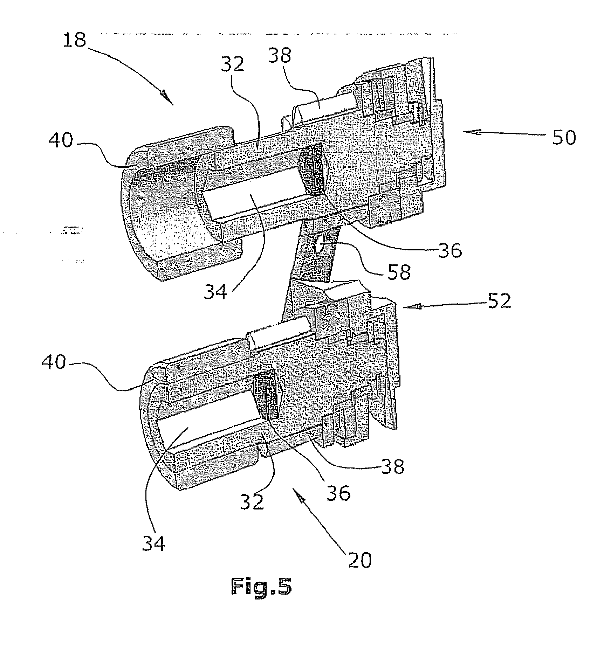

Die beiden Werkzeugaufnahmen 18, 20 weisen, wie insbesondere aus Fig. 5 ersichtlich ist, jeweils einen im Wesentlichen zylindrisch ausgebildetes Bit-Aufnahmeelement 32 mit einer Öffnung 34 mit sechseckigem Querschnitt auf. In die Aufnehmung 34 kann das entsprechende Bit eingesteckt werden. Zum Halten des Bits in der Öffnung 34 ist in der dargestellten Ausführungsform am Boden der Öffnung 34 ein Magnet 36 angeordnet. Zusätzlich kann in der Öffnung 34 ein Ring wie ein O-Ring vorgesehen sein. Hierdurch wird das Halten des Bits in der Öffnung 34 zusätzlich sichergestellt, Ferner weist jede Werkzeugaufnahme 18, 20 ein Kraftübertagungselement 38, bei dem es sich im dargestellten Ausführungsbeispiel um ein Zahnrad handelt, auf. Das Zahnrad 38 ist fest mit dem Bit-Aufnahmeelement 32 verbunden.

Die beiden Werkzeugaufnahmen 18, 20 sind jeweils in einer in dem Gehäuse 16 gehaltenen Hülse 40 drehbar gelagert.

Die beiden Werkzeugaufnahmen 18, 20 sind zusammen mit den von ihnen aufgenommenen Bits 22, 24 in Richtung ihrer Längsachsen 30 axial verschiebbar. Hierzu ist ein Betätigungselement 44 vorgesehen, das mit einem aus dem Gehäuse 16 herausragenden Betätigungsgriff 42 verbunden ist. Das Betätigungselement 44 ist im Wesentlichen scheibenförmig ausgebildet, so dass die Antriebswelle 14 durch das Betätigungselement 44 hindurch ragt. Das Betätigungselement weist zwei Betätigungsflächen 46, 48 auf. Die Betätigungsflächen 46, 48 sind gegenüber den Längsachsen 30 der Werkzeugaufnahmen 18, 20 geneigt. Im dargestellten Ausführungsbeispiel weisen die Betätigungsflächen einen Winkel von ca, 45° zu der Längsachse 30 auf. Die beiden Betätigungsflächen 46, 48 wirken mit Anlageflächen 50, 52 (Fig. 5) der Werkzeugaufnahmen 18, 20 zusammen.

Das Verschieben der Werkzeugaufnahme 18 aus der in Fig. 2 dargestellten zurückgezogenen Position in die in Fig. 4 dargestellte ausgeschobene Position erfolgt durch Verschwenken des Betätigungselements 44 ausgehend von Fig. 2 über Fig. 3 nach links in die in Fig. 4 dargestellte Stellung. Hierbei gleitet die Anlagefläche 50 (Fig. 5) an der Betätigungsfläche 46 entlang, wobei auf Grund der Neigung der Betätigungsfläche 46 die Werkzeugaufnahme 18 nach außen, d. h. in die ausgeschobene Position gedrückt wird.

Durch das Verschieben der Werkzeugaufnahme 18 aus der zurückgezogenen Position (Fig. 2) in die ausgeschobene Position (Fig. 4) wird das Zahnrad 38 der Werkzeugaufnahme 18 in Eingriff mit einem Antriebselement, wie einem Zahnrad 54 gebracht. Das Zahnrad 54 ist fest mit der Antriebswelle 14 verbunden. Um während des Verschiebens des Zahnrades 38 in das Zahnrad 54 ein gutes Eingreifen der Zähne zu ermöglichen, sind die Zähne an ihren Enden spitz zulaufend ausgebildet, bzw. gefast.

Gleichzeitig mit dem Verschieben der Werkzeugaufnahme 18 aus der zurückgezogenen Position (Fig. 2) in die ausgeschobene Position (Fig. 4) soll die andere Werkzeugaufnahme 20 aus der ausgeschobenen Position (Fig. 2) in die zurückgezogene Position (Fig. 4) übergeführt werden. Hierzu ist zunächst an dem Betätigungselement 44 die geneigte Betätigungsfläche 48 vorgesehen, um ein Zuruckbewegen der Werkzeugaufnahme 20 zu ermöglichen. Da im dargestellten Ausführungsbeispiel jedoch keine Verbindung zwischen den Betätigungsflächen 46, 48 und den Werkzeugaufnahmen 18, 20 besteht, wird durch die Ausgestaltung des Betätigungselements 44 zunächst nur entsprechende Platzbedarf zum Zurückbewegen der Werkzeugaufnahme 20 geschaffen.

Das Zurückbewegen selbst erfolgt durch ein Rückführelement, das im dargestellten Ausführungsbeispiel als Wippe 56 ausgebildet ist. Die Wippe 56 weist einen Drehpunkt 58 auf. Der Drehpunkt 58 ist ortsfest und beispielsweise dadurch realisiert, dass die Wippe eine Öffnung aufweist, in die ein an dem in den Figuren 2 bis 4 dargestellten Gehäusedeckel angespitzter Stift eingreift. Wie aus den Fign. 2 bis 4 ersichtlich ist, bewirkt ein Verschieben der Werkzeugaufnahme aus der zurückgezogenen Position (Fig. 2) in die ausgeschobene Position (Fig. 4) ein Verschwenken der Wippe 56 um den Drehpunkt 58. Da die beiden Enden der Wippe 56 jeweils über einen Stift 60 mit je einer Werkzeugaufnahme 18, 20 verbunden sind, erfolgt durch das Verschwenken der Wippe um den Drehpunkt 58 ein Zurückziehen der Werkzeugaufnahme 20 in die zurückgezogene Position.

Durch Verschwenken des Betätigungselements 44 in die entgegengesetzte Richtung, d. h. aus der in Fig. 4 dargestellten Lage in die in Fig. 2 dargestellte Lage, erfolgt entsprechend ein Herausschieben der Werkzeugaufnahme 20 und ein Zurückziehen der Werkzeugaufnahme 18.

In der ausgeschobenen Position der Hülse 40 liegt ein mit der Hülse verbundenes in Richtung des Betätigungselements 44 weisendes Element nicht mehr an einer schrägen Betätigungsfläche 46, 48 sondern an einer ebenen Fläche an. Die ebene Fläche verläuft senkrecht zur Längsachse 30 der Werkzeugaufnahmen 18, 20. Hierdurch kann durch Einwirken von Kräften auf das Bit 22 kein Verdrehen des Betätigungselements 44 und somit ein Einschieben des Bits 22 in das Gehäuse erfolgen. Ein Bewegen des Betätigungselements 44 kann somit nur aktiv durch den Benutzer erfolgen. Ggf. können zusätzlich Rastelemente oder andere Halterungen zum Fixieren des Betätigungselements 44 in den beiden Endpositionen vorgesehen sein.

## Patentansprüche

1. Werkzeugkopf für ein Elektro-Werkzeug insbesondere zum Schrauben und/oder Bohren mit
mindestens zwei Werkzeugaufnahmen (18, 20) und
einer mit den Werkzeugaufnahmen (18, 20) verbindbaren Antriebswelle (14) zum Drehen der Werkzeugaufnahme,
**dadurch gekennzeichnet, dass**
die Werkzeugaufnahmen (18, 20) in Richtung ihrer Längsachsen (30) verschiebbar sind.

2. Werkzeugkopf nach Anspruch 1, **dadurch gekennzeichnet, dass** die Werkzeugaufnahmen (18, 20) jeweils ein Kraftübertragungselement (38) aufweisen, das mit einem mit der Antriebswelle (14) verbundenen Antriebselement (54) verbindbar ist.

3. Werkzeugkopf nach Anspruch 2, **dadurch gekennzeichnet, dass** die Kraftübertragungselemente (38) durch Verschieben der Werkzeugaufnahmen (18, 20) mit dem Antriebselement (54) in bzw. außer Eingriff bringbar sind.

4. Werkzeugkopf nach einem der Ansprüche 1 bis 3, **dadurch gekennzeichnet, dass** die Antriebswelle (14) in einem Gehäuse (16) drehbar gelagert ist.

5. Werkzeugkopf nach einem der Ansprüche 1 bis 4, **gekennzeichnet durch** ein Betätigungselement (44) zum Verschieben der Werkzeugaufnahmen (18, 20).

6. Werkzeugkopf nach Anspruch 5, **dadurch gekennzeichnet, dass** das Betätigungselement (44) zum Verschieben der Werkzeugaufnahmen (18, 20) schwenkbar ist.

7. Werkzeugkopf nach Anspruch 5 oder 6, **dadurch gekennzeichnet, dass** das Betätigungselement (44) die Antriebswelle (14) zumindest teilweise umschließt.

8. Werkzeugkopf nach einem der Ansprüche 5 bis 7, **dadurch gekennzeichnet, dass** das Betätigungselement (44) je Werkzeugaufnahme (18, 20) eine Betätigungsfläche (46, 48) aufweist, die gegenüber der Längsachse (30) der Werkzeugaufnahmen (18, 20) geneigt ist.

9. Werkzeugkopf nach einem der Ansprüche 1 bis 8, **gekennzeichnet durch** mindestens ein Ruckführelement (56) zum Überführen einer Werkzeugaufnahme (18, 20) in eine zurückgezogene Position, wenn eine andere Werkzeugaufnahme (18, 20) in eine ausgeschobene Position übergeführt wird.

10. Werkzeugkopf nach Anspruch 9, **dadurch gekennzeichnet, dass** das Ruckführelement eine vorzugsweise zwei einander gegenüberliegende mit zwei Werkzeugaufnahmen (18, 20) verbundene Wippe aufweist.

11. Werkzeugkopf nach Anspruch 10, **dadurch gekennzeichnet, dass** ein Drehpunkt (58) der Wippe (56) bzw. der Wippen (56) ortsfest ist, insbesondere mit dem Gehäuse (16) verbunden ist.
